(19) Europäisches Patentamt / European Patent Office / Office européen des brevets

(11) EP 1 899 714 B1

(12) **EUROPÄISCHE PATENTSCHRIFT**

(45) Veröffentlichungstag und Bekanntmachung des Hinweises auf die Patenterteilung:
**10.02.2010 Patentblatt 2010/06**

(21) Anmeldenummer: **06776185.8**

(22) Anmeldetag: **06.07.2006**

(51) Int Cl.:
**G01N 23/04** (2006.01)    **A61B 6/00** (2006.01)

(86) Internationale Anmeldenummer:
**PCT/EP2006/006756**

(87) Internationale Veröffentlichungsnummer:
**WO 2007/003444 (11.01.2007 Gazette 2007/02)**

(54) **VERFAHREN UND ANORDNUNG ZUM UNTERSUCHEN EINES MESSOBJEKTS MITTELS INVASIVER STRAHLUNG**

METHOD AND ARRANGEMENT FOR INVESTIGATION OF AN OBJECT TO BE MEASURED BY MEANS OF INVASIVE RADIATION

PROCEDE ET DISPOSITIF POUR ETUDIER UN OBJET DE MESURE AU MOYEN D'UN RAYONNEMENT INVASIF

(84) Benannte Vertragsstaaten:
**DE FR GB IT**

(30) Priorität: **06.07.2005 DE 102005032686**

(43) Veröffentlichungstag der Anmeldung:
**19.03.2008 Patentblatt 2008/12**

(73) Patentinhaber: **Carl Zeiss Industrielle Messtechnik GmbH**
**73447 Oberkochen (DE)**

(72) Erfinder: **ENGEL, Thomas**
**73462 Aalen-Waldhausen (DE)**

(74) Vertreter: **Patentanwälte Bressel und Partner**
**Radickestrasse 48**
**12489 Berlin (DE)**

(56) Entgegenhaltungen:
WO-A2-02/31767    WO-A2-2004/006745
US-A- 4 415 980    US-A- 6 047 041

EP 1 899 714 B1

## Beschreibung

Die Erfindung betrifft ein Verfahren und eine Anordnung zum Untersuchen eines Messobjekts, wobei das Messobjekt invasiver Strahlung ausgesetzt wird, insbesondere Röntgenstrahlung.

Die Verwendung invasiver Strahlung für die Untersuchung von Werkstücken ist bekannt. Bei der Computertomografie (CT) wird das Werkstück beispielsweise auf einem Drehtisch angeordnet und durch Drehung des Drehtisches in verschiedene Drehstellungen aus verschiedenen Richtungen von Röntgenstrahlung durchstrahlt. Die durch Extinktion in dem Material des Werkstücks geschwächte Strahlung wird orts- und zeitaufgelöst von einer Sensoreinrichtung detektiert. Durch die tomografische Rückprojektion wird daraus ein örtlich dreidimensionales Modell des Werkstücks berechnet. Das Modell enthält jeweils für einzelne Volumenbereiche die Materialeigenschaften für die Extinktion der Röntgenstrahlung. Ein Beispiel für die CT wird in DE 39 24 066 A1 beschrieben.

Nachteilig an dieser Vorgehensweise ist der hohe Aufwand für die Messung und die tomografische Rückprojektion. Insbesondere bei Werkstücken mit komplexeren Formen und/oder bei Werkstücken mit mehreren verschiedenen Materialien werden leistungsfähige Computer und/oder Computercluster benötigt. Die Berechnung des Modells (des Messobjektes durch die Rekonstruktion) kann einige Stunden dauern. Für die Untersuchung von Werkstücken aus der Serienfertigung ist die Computertomografie daher nur bedingt geeignet. Meist können nur wenige Exemplare einer Serie untersucht werden.

US 6,047,041 beschreibt ein CT-Verfahren, bei dem ein Standard von Messungen für ein akzeptables Objekt durchgeführt wird. Es wird eine Liste von einzelnen Punkten bei einem spezifizierten Maximum-Abstand für alle Oberflächen eines akzeptablen Objekts erzeugt und es wird eine Liste von Wanddicken bei jedem einzelnen Punkt für ein akzeptables Objekt erzeugt. Der Standard von Messungen des akzeptablen Teils wird von Messungen eines zuvor hergestellten akzeptablen Teils abgeleitet. Es werden erwartete Dicken und der Offset und die Variationen, die aus einem Trainingssatz von im Allgemeinen akzeptablen Produktionsteilen gewonnen werden, spezifiziert. Es werden Unterschiede zwischen erwarteten und tatsächlichen Oberflächenpositionen bestimmt und abgespeichert und auch Wanddicken bestimmt. Außerdem wird ein Satz zusammenfassender Statistiken für jeden Toleranzbereich erzeugt und weitere Auswertungen vorgenommen, wie z.B. ein Histogramm der Unterschiede zwischen Messung und Design sowie Punktlisten in jedem Toleranzbereich und Außer-Toleranzbereich.

WO 02/31767 beschreibt, dass Vorabinformationen bzw. ein Modell eine Objektes, wie z. B. ein CAD-Modell eines Sollaufbaus eines Prüflings, bereits vor der Datengewinnung bzw. der Messung des Objekts verwendet werden, um simulierte Durchstrahlungen des Objektes zu simulieren. Diese simulierten Daten können dann dahingehend ausgewertet werden, um die Messparameter einer Messeinrichtung, wie z. B. eines Computertomografen, zu optimieren. So werden z. B. eine bzw. mehrere bessere oder optimale Durchstrahlungsrichtungen bestimmt.

Außerdem ist es bekannt, körperliche Gegenstände radiografisch zu vermessen. Aus DE 198 46 885 A1 wird ein derartiges Verfahren beschrieben, bei dem ein Gegenstand zwischen einer Gamma- oder Röntgenstrahlungsquelle und einem Strahlensensor positioniert und der Strahlung ausgesetzt wird. Danach wird die Abbildung des Gegenstandes auf dem Strahlensensor in Form einer Vielzahl von Punkten jeweils mit zugehörigem Grauwert digital erfasst und auf dem Monitor eines Computers bildlich dargestellt. Mittels des Computers werden aus den Positionen und/oder Grauwerten der vom Strahlensensor registrierten Punkte sowie der relativen Lage der Strahlenquelle und des Gegenstands mit Bezug auf den Strahlensensor Maße des Gegenstands berechnet.

Es ist eine Aufgabe der vorliegenden Erfindung, ein Verfahren und eine Anordnung zum Untersuchen eines Messobjekts mittels invasiver Strahlung anzugeben, mit denen der Aufwand für die Feststellung eines Fehlers verringert werden kann. Insbesondere soll es möglich sein, mit vertretbarem Aufwand einen wesentlich größere Anteil von Werkstücken aus einer Serienfertigung auf Fehler, Toleranzen und/oder kritische Dimensionen (Abmessungen, z. B. Dicke, Breite und/oder Durchmesser zumindest von Teilen des Werkstücks) zu untersuchen.

Die beigefügten Patentansprüche definieren den Schutzumfang.

Es wird ein Verfahren zum Untersuchen eines Messobjekts vorgeschlagen, wobei

- das Messobjekt invasiver Strahlung ausgesetzt wird,
- eine Wechselwirkung der invasiven Strahlung mit dem Messobjekt mittels einer strahlungsempfindlichen, vorzugsweise örtlich auflösenden Sensoreinrichtung detektiert wird,
- ein erwartetes Detektionsergebnis der Sensoreinrichtung unter Verwendung einer Sollgeometrie des Messobjekts und unter Verwendung von Materialeigenschaften berechnet wird und/oder ein erwartetes Detektionsergebnis durch Vermessung zumindest eines Meisterteils ermittelt wird und
- das erwartete Detektionsergebnis mit einem tatsächliche Detektionsergebnis der Sensoreinrichtung verglichen wird.

Bei dem tatsächlichen Detektionsergebnis handelt es sich insbesondere um ein unmittelbares Detektionsergebnis der Sensoreinrichtung, das ohne tomografische Rückprojektion (CT) erhalten wurde. Dies schließt jedoch nicht aus, dass nach dem Vergleich eine solche Rückprojektion durchgeführt wird.

Von dem Begriff invasive Strahlung ist Strahlung jeglicher Art umfasst, die in das Messobjekt eindringt und/oder das Messobjekt durchdringt. Außer elektromagnetischer Strahlung - wie z. B. Röntgenstrahlung - kann auch Partikelstrahlung (etwa Elektronenstrahlung oder Positronenstrahlung) eingesetzt werden. Auch kann elektromagnetische Strahlung in anderen Wellenlängenbereichen (etwa im sichtbaren oder Infrarotwellenlängenbereich) verwendet werden. Auch können wie z. B. bei der Magnetresonanz (MR)-Technologie oder bei der Anregung von Energiezuständen durch elektromagnetische Strahlung (z. B. Lumineszenz) Sekundäreffekte für die Untersuchung genutzt werden. Auch bei der Röntgenstrahlung kann Sekundär- oder Streustrahlung detektiert werden.

Bei einer bevorzugten Art der Untersuchung des Messobjekts wird (wie bei der CT) elektromagnetische Strahlung verwendet, die das Messobjekt durchdringt und auf der gegenüberliegenden Seite der Strahlungsquelle von der örtlich auflösenden Sensoreinrichtung detektiert wird. Vorteil dieser Anordnung ist ihre Einfachheit gegenüber Anordnungen, die reflektierte Strahlung auswerten. Durch Vergleich mit dem erwarteten Detektionsergebnis können unmittelbar Informationen über Fehler in dem Inneren des Messobjekts gewonnen werden, beispielsweise unerwünschte Risse und Hohlräume in dem Material und/oder falsch positionierte Formmerkmale wie Bohrungen und Ausnehmungen.

Die Sollgeometrie wird beispielsweise aus CAD (Computer Aided Design)-Planungsdaten des Messobjekts erhalten. Die Sollgeometrie umfasst vorzugsweise auch die Spezifikation, welche Teile des Messobjekts aus welchem Material gefertigt sind. Insbesondere weisen moderne CAD-Systeme eine Daten-Schnittstelle auf, die der Weiterverarbeitung eines dreidimensionalen Modells des jeweiligen Werkstücks oder Messobjekts durch digitale Datenverarbeitung dient (CAM, Computer Aided Modelling). In einer bevorzugten Ausgestaltung einer erfindungsgemäßen Anordnung ist die Anordnung mit einer solchen Schnittstelle verbunden oder zumindest ausgestaltet, mit einer solchen Schnittstelle verbunden zu werden. Alternativ oder zusätzlich ist das CAD-System Teil der Anordnung, d.h. zumindest die für die Berechnung der erwarteten Detektionsergebnisse erforderlichen Einrichtungen sind Teil des CAD-Systems. Das CAD-System kann darüber hinaus weitere Aufgaben erfüllen, etwa die Vergleichseinrichtung zum Vergleichen der erwarteten und der gemessenen Detektionsergebnisse aufweisen. Ferner können in einem von dem CAD-System über die Schnittstelle bereitgestellten Modell des Werkstücks Materialeigenschaften enthalten sein und z. B. jeweils durch eine einem bestimmten Material zugeordnete Farbe bzw. den entsprechenden Farbwert codiert sein. Derartige Modelle können auf einer Bilddarstellungseinrichtung dargestellt werden. Vorzugsweise können entsprechende Modelle des erwarteten Detektionsergebnisses und/oder Modelle von Unterschieden zwischen dem gemessenen und dem erwarteten Detektionsergebnis erzeugt werden.

Bei den Materialeigenschaften handelt es sich insbesondere um den oder die Absorptionskoeffizienten des oder der Materialien des Messobjekts. Außerdem können die Materialeigenschaften auch enthalten, wie die Strahlung in dem Material gestreut wird und/oder wie sich Sekundäreffekte (siehe oben) auswirken. Die Materialeigenschaften können beispielsweise in einer separaten Messung an einem Block aus dem jeweiligen Material bestimmt werden und/oder aus der Literatur entnommen werden. Vorzugsweise sind die Materialeigenschaften für den Vergleich als Funktion der verschiedenen bei der Vermessung des Messobjekts einstellbaren Parameter, wie z. B. Wellenlänge der invasiven Strahlung, vorhanden.

Allgemeiner formuliert ist es wahlweise, z. B. je nach gewünschter Genauigkeit und/oder je nach Art der untersuchten Wechselwirkung zwischen der invasiven Strahlung und dem Messobjekt, insbesondere möglich, eine einfachere oder komplexere Beschreibung der Wechselwirkung bei der Berechnung des erwarteten Detektionsergebnisses zu verwenden. Zum Beispiel kann in einem Fall lediglich die Absorption der invasiven Strahlung in dem Material berücksichtigt werden und kann in einem anderen Fall außerdem die Steuerung von Strahlung und/oder die Erzeugung von Sekundärstrahlung berücksichtigt werden.

Es ist jedoch auch möglich, zumindest ein Meisterteil des Messobjekts auf derselben Messeinrichtung zu vermessen, die auch zur Untersuchung des eigentlichen Messobjekts verwendet wird. D. h. das Meisterteil wird der invasiven Strahlung in derselben Weise ausgesetzt wie vorher oder nachher das Messobjekt. Die Messergebnisse aus der Vermessung des Meisterteils können dann unmittelbar für den Vergleich verwendet werden. Es können auch Kombinationen der Ergebnisse der Vermessung mehrerer Meisterteile für den Vergleich verwendet werden. Dabei ist es insbesondere möglich, das Meisterteil oder die Meisterteile wiederholt unter unterschiedlichen Messbedingungen (z. B. Belichtungszeit, Einstrahlungsrichtung, Art und/oder Wellenlänge der verwendeten Strahlung) zu vermessen und die Vergleichswerte zu bestimmen. Dennoch ist bei Untersuchung einer Serienfertigung der Aufwand für die Vermessung eines Meisterteils wesentlich geringer als die konventionelle tomografische Rückprojektion für jedes einzelne Messobjekts auszuführen.

Ferner ist es möglich, das oder die Meisterteile mittels anderer Messverfahren zu vermessen als bei der Vermessung des Messobjekts angewendet werden. Z. B. können hierfür Verfahren der klassischen Koordinatenmesstechnik (etwa optische und/oder taktile Bestimmung von Oberflächenkoordinaten) eingesetzt werden. Zumindest Teile der erwarteten Detektionsergebnisse können daraus berechnet werden.

Auch ist es möglich, mit einem dieser anderen Messverfahren ein erwartetes Detektionsergebnis auszuwählen, wobei zur Auswahl eine Mehrzahl verschiedener erwarteter Detektionsergebnisse zur Verfügung steht. In diesem Fall kann das Messobjekt selbst Gegenstand der Vermessung mit dem anderen Messverfahren sein.

Das erfindungsgemäße Verfahren hat den Vorteil, dass die Bestimmung des erwarteten Detektionsergebnisses in vielen Fällen mit wesentlich geringerem Aufwand möglich ist als eine tomografische Rückprojektion. Dies gilt insbesondere dann, wenn eine Mehrzahl von Exemplaren, die derselben Sollgeometrie entsprechen sollen, untersucht wird. Der mehrfach auszuführenden tomografischen Rückprojektion steht in diesem Fall lediglich die einmalige Bestimmung des erwarteten Detektionsergebnisses gegenüber.

Außerdem können insbesondere durch Festlegung einer erlaubten Toleranz der Materialeigenschaften und/ oder der Sollgeometrie auf einfache Weise abweichende erwartete Detektionsergebnisse berechnet werden. Stimmt das gemessene Detektionsergebnis noch mit diesen abweichenden erwarteten Detektionsergebnissen überein (oder liegt das Detektionsergebnis zwischen dem idealen erwarteten Detektionsergebnis und dem abweichenden erwarteten Detektionsergebnis), liegt noch kein Fehler vor. Insbesondere kann hieraus jeweils ein Grenzwert für die einzelnen Detektorsignale ermittelt werden (siehe unten).

Es wird zumindest ein zweites erwartetes Detektionsergebnis berechnet, wobei das zweite Detektionsergebnis einem gegenüber der Sollgeometrie und/oder den erwarteten Materialeigenschaften veränderten Zustand entsprechen kann, der noch in einem zulässigen Bereich ist, und wird durch Vergleich des zweiten erwarteten Detektionsergebnisses mit dem tatsächlichen Detektionsergebnis ermittelt, ob das tatsächliche Detektionsergebnis noch in dem zulässigen Bereich liegt.

Um die erwarteten mit den gemessenen Detektionsergebnissen vergleichen zu können, wird eine Registrierung der Koordinatensysteme der Sollgeometrie und der Messanordnung zur Vermessung des Messobjekts vorgenommen oder ist bereits vorgenommen worden. Unter der Registrierung wird die Herstellung eines eindeutigen örtlichen Bezuges hinsichtlich der gegenseitigen Position und Ausrichtung der Koordinatensysteme verstanden.

Insbesondere sind bei der Registrierung Vorkenntnisse über die Position und Ausrichtung des Messobjekts bei der Messung und damit in Bezug auf das Messsystem vorhanden. Auf diese Weise kann der gemessene Koordinaten-Datensatz bereits vor-registriert sein, d. h. bis auf einen kleinen Fehler bezüglich des Koordinatensystems der Sollgeometrie registriert sein. Insbesondere kann die Messanordnung mechanische derart ausgestaltet sein, dass das Messobjekt sich in einer definierten Positionen und/oder Ausrichtung relativ zu der Messanordnung (insbesondere relativ zu der Strahlungsquelle und der Sensoreinrichtung) befindet, wenn es in Kontakt mit einem bestimmten Teil oder Teilen der Messanordnung ist (z. B. sich in einer mechanischen Aufnahme/Passung befindet).

Es kann optional außerdem eine Korrektur der Registrierung durchgeführt werden. Dabei werden zum Beispiel die Messwerte von charakteristischen örtlichen Bereichen des Messobjekts mit entsprechenden erwarteten Messwerten verglichen. Stimmt die Ausrichtung und/oder Position nicht überein, kann die Abweichung verglichen werden. Beispielsweise wird die Summe der Fehlerquadrate (der Fehler entspricht jeweils der Abweichung der Messwerte, insbesondere Grauwerte, für entsprechende Positionen) aller bei der Korrektur betrachteten Bereiche oder Pixel minimiert oder es werden die größte Fehler minimiert.

Allgemeiner formuliert wird eine Mehrzahl von erwarteten Detektionsergebnissen berechnet werden, wobei jedes der Detektionsergebnisse einer verschiedenen Position und/oder Ausrichtung des Messobjekts relativ zu der Strahlungsquelle und/oder relativ zu des Sensoreinrichtung entspricht und/oder verschiedenen Werten eines anderen Messparameters entspricht. Aus dem Vergleich der verschiedenen erwarteten Detektionsergebnisse mit dem tatsächlichen Detektionsergebnis kann ermittelt werden (beispielsweise durch die beschriebene Minimierung der Fehlerquadrate), welches der erwarteten Detektionsergebnisse am besten mit dem tatsächlichen Detektionsergebnis übereinstimmt, und es kann daraus die Korrektur der Registrierung ermittelt werden. Beispielsweise kann zumindest ein Teil der erwarteten Detektionsergebnisse jeweils einer von verschiedenen Drehstellungen des Messobjekts um eine Drehachse der Messanordnung entsprechen.

Vorzugsweise wird vor einer Vermessung des Messobjekts ein erwartetes Detektionsergebnis ermittelt und/ oder berechnet und wird das Detektionsergebnis ausgewertet, um Messparameter bei der Vermessung des Messobjekts und/oder um eine Art der Vermessung des Messobjekts zu wählen. Z. B. können daher Messsignale bei der Vermessung des Messobjekts in einem günstigen Wertebereich der Sensoreinrichtung liegen. Insbesondere können die aus der Vermessung des Messobjekts erhaltenen Daten optimiert werden (z. B. hinsichtlich ihrer Qualität, etwa dadurch, dass die Messdaten in einem optimalen Messbereich der Sensoreinrichtung liegen) und/oder der Aufwand für die Vermessung des Messobjekts minimiert werden (insbesondere Minimierung der Messzeit). Durch eine optimale Planung und Auslegung der Vermessung kann daher sehr viel Zeit und Aufwand bei der Durchführung der Messung und deren Auswertung gespart werden.

Ein weiterer Vorteil der vorliegenden Erfindung besteht darin, dass insbesondere durch die in dem vorangegangenen Absatz beschriebene Planung lediglich bestimmte (ausgewählte) Strahlungsbilder des Messobjekts aufgenommen und ausgewertet werden können. Dabei handelt es sich z. B. um besonders aussagekräftige Bilder. Der Messaufwand kann daher sehr gering gehalten werden.

Wenn in dem Vergleich festgestellt wurde, dass ein Fehler vorliegt, kann optional außerdem eine vollständige CT-Untersuchung inklusive tomografischer Rückprojektion stattfinden. Dies hat den Vorteil, dass eine große Anzahl von Werkstücken aus einer Serienfertigung untersucht werden kann und im Fehlerfall in bewährter Weise festgestellt werden kann, an welchem Ort des Messobjekts ein Fehler vorliegt.

Vorzugsweise wird das aus der Vermessung des Messobjekts erhaltene Detektionsergebnis durch Vergleich mit dem oder den erwarteten Detektionsergebnissen auf Fehler überprüft. Bei der Fehlerprüfung wird insbesondere festgestellt, ob das gemessene Detektionsergebnis innerhalb von durch die erwarteten Detektionsergebnisse gegebenen Toleranzen liegt. Dabei kann die Fehlerauswertung örtlich aufgelöst bezogen auf ein Koordinatensystem des Messobjekts und/oder bezogen auf ein Koordinatensystem der Sensoreinrichtung durchgeführt werden. Z. B. werden eine oder mehrere Abmessungen (z. B. Dicke, Breite und/oder Durchmesser zumindest von Teilen des Werkstücks) bestimmt und festgestellt, ob die jeweilige Toleranz eingehalten ist.

Bei der Sensoreinrichtung kann es sich auch um eine Sensoreinrichtung mit mehreren voneinander beabstandeten Teilsensoren handeln, wobei die Teilsensoren jeweils wieder eine örtlich aufgelöste Messung der auftretenden Strahlung ermöglichen.

Z. B. weist zumindest einer der Teilsensoren oder die nicht örtlich verteilt angeordnete Sensoreinrichtung eine Vielzahl von örtlichen Bereichen auf, wobei die in den einzelnen örtlichen Bereichen auftreffende Strahlung in ein eigenständiges Messsignal umgewandelt werden kann. Bei den Teilsensoren oder bei einer nicht örtlich verteilt angeordneten Sensoreinrichtung kann es sich beispielsweise um eine Matrix aus strahlungsempfindlichen Halbleiterelementen handeln. Dabei kommen sowohl Zeilenmatrizen mit nur einer Zeile Halbleiterelemente als auch Halbleitermatrizen mit Sensorelementen in mehreren Zeilen und Spalten in Frage.

Beispielsweise weist die Sensoreinrichtung eine Vielzahl der strahlungsempfindlichen örtlichen Bereiche auf und wird das erwartete Detektionsergebnis für den Vergleich mit dem gemessenen Detektionsergebnis so aufbereitet, dass für jeden der örtlichen Bereiche ein Vergleichswert zur Verfügung steht. Dadurch kann schnellstmöglich festgestellt werden, ob ein Fehler vorliegt. Insbesondere kann ein Grenzwert für die Differenz des erwarteten und gemessenen Detektionsergebnisses definiert sein. Wird der Grenzwert in einem der örtlichen Bereiche erreicht oder überschritten, wird festgestellt, dass ein Fehler in dem örtlichen Bereich vorliegt.

Insbesondere können die Sensorsignale der Sensoreinrichtung automatisch digitalisiert werden, sodass das tatsächliche Detektionsergebnis in digitalisierter Form zum Vergleich mit dem erwarteten Detektionsergebnis zur Verfügung steht.

Bevorzugtermaßen wird das Messobjekt aus verschiedenen Richtungen und/oder in verschiedenen Drehstellungen (und insbesondere zeitlich nacheinander) der invasiven Strahlung ausgesetzt und wird jeweils ein Detektionsergebnis festgestellt, d.h. die Resultate der Wechselwirkung mit dem Messobjekt jeweils detektiert. Insbesondere bei der Durchstrahlung des Messobjekts mit der invasiven Strahlung kann so erreicht werden, dass jeder Volumenbereich des Messobjekts aus unterschiedlichen Richtungen durchstrahlt wird. Jedes der (insbesondere zeitlich nacheinander festgestellten) Detektionsergebnisse kann mit einem erwarteten Detektionsergebnis verglichen werden und es kann aus Abweichungen der tatsächlichen Detektionsergebnisse von den erwarteten Detektionsergebnissen der Ort eines Fehlers des Messobjekts gegenüber der Sollgeometrie ermittelt oder zumindest eingegrenzt werden. Der Aufwand hierfür ist jedoch wesentlich geringer als bei einer vollständigen tomografischen Rückprojektion.

Bei einer Weiterbildung dieser Ausführungsform des Verfahrens werden die Detektionsergebnisse jeweils als Felder von Detektionswerten erzeugt (wie z. B. auch bei der konventionellen CT, mit anschließender Rückprojektion), wobei jeweils die tatsächlichen Detektionswerte und die zugehörigen erwarteten Detektionswerte miteinander verglichen werden, insbesondere voneinander subtrahiert werden. Mit den daraus resultierenden Feldern von Vergleichswerten wird dann durch eine tomografische Rückprojektion ein örtlich dreidimensionales Fehlermodell des Messobjekts erzeugt. Unter einem Feld von Werten wird eine auf ein Koordinatensystem des Messobjekts bzw. der Sollgeometrie bezogene Mehrzahl der Werte verstanden. Anders ausgedrückt wird durch das Feld einer Mehrzahl von örtlichen Bereichen in dem jeweiligen Koordinatensystem jeweils ein Wert zugeordnet, etwa ein Grauwert, der einer Absorption von Strahlung entspricht. Wenn das Messobjekt von der invasiven Strahlung durchstrahlt wird und die entsprechend geschwächte Strahlung von der Sensoreinrichtung detektiert wird, entspricht dem ein zweidimensionales Koordinatensystem, dessen Achsen in einer Ebene verlaufen, die sich ungefähr senkrecht zur Richtung der Strahlung erstreckt.

Dieser Ausführungsform der Erfindung liegt die Erkenntnis zu Grunde, dass auch in den Ausgangsdaten einer solchen tomografischen Rückprojektion (d. h. den Unterschieden der aus verschiedenen Richtungen aufgenommenen Strahlungsbildern zu den erwarteten Detektionsergebnissen) bereits sämtliche Informationen darüber vorhanden sind, an welcher Stelle des Messobjekts der Fehler vorliegt. Die Information muss jedoch nicht durch eine aufwändige, vollständige tomografische Rückprojektion ausgewertet werden.

Allgemeiner ausgedrückt besteht der Unterschied zu der konventionellen tomografischen Rückprojektion darin, dass nicht die Messwerte sondern die Vergleichswerte (insbesondere jeweils die Differenz zwischen dem gemessenen und dem erwarteten Messwert eines örtlichen Bereichs der Sensoreinrichtung) die Eingangswerte für die Rückprojektion sind. Insbesondere können alle Eingangswerte (wobei jeder Eingangswert einem Sensorelement der Sensoreinrichtung entsprechen kann) auf Null gesetzt werden, die sich nicht um mehr als ein vorgegebener Grenzwert (siehe oben) von dem erwarteten Eingangswert unterscheiden. In diesem Fall ist der Aufwand für die Rückprojektion erheblich geringer als bei der konventionellen Rückprojektion.

Vor dem Vergleich des erwarteten mit dem gemessenen Detektionsergebnis wird das gemessene Detektionsergebnis vorzugsweise bezüglich der üblichen systematischen Messfehler korrigiert. Insbesondere wird das Untergrundsignal (Offset) korrigiert (insbesondere subtrahiert) und die Verstärkung (Gain) des Messsignals korrekt eingestellt oder korrigiert.

Bei einer Ausführungsvariante können zumindest in Teilbereichen der Sensoreinrichtung nicht ortsaufgelöste Messwerte gewonnen werden oder kann aus den ortsaufgelöst gewonnenen Messwerten ein örtlicher Mittelwert bestimmt werden. Durch einen Vergleich mit einem entsprechenden erwarteten Messwert können auf besonders einfache Weise erste Ergebnisse über das Vorliegen eines Fehlers oder einer Abweichung von dem Sollzustand gewonnen werden. Beispielsweise kann auf diese Weise (unter Berücksichtigung des Gewichts) die mittlere Dichte des Messobjekts gemessen und mit dem erwarteten Wert verglichen werden. Existieren z. B. unerwartete bzw. unerwünschte Hohlräume wie Lunker oder Blasen in dem Messobjekt kann dies daraus festgestellt werden.

Außerdem wird eine Anordnung zum Untersuchen eines Messobjekts vorgeschlagen, wobei die Anordnung Folgendes aufweist:

- eine Strahlungsquelle zur Erzeugung invasiver Strahlung,
- eine Sensoreinrichtung zur Messung eines Ergebnisses einer ' Wechselwirkung der invasiven Strahlung mit dem Messobjekt,
- eine Berechnungseinrichtung zur Berechnung eines erwarteten Detektionsergebnisses der Sensoreinrichtung unter Verwendung einer Sollgeometrie des Messobjekts und unter Verwendung von Materialeigenschaften und/oder eine Speichereinrichtung zur Speicherung eines erwarteten Detektionsergebnisses, das durch Vermessung zumindest eines Meisterteils ermittelt wird oder wurde, und
- eine Vergleichseinrichtung, die mit der Sensoreinrichtung und der Berechnungseinrichtung verbunden ist und/oder die mit der Sensoreinrichtung und der Speichereinrichtung verbunden ist, wobei die Vergleichseinrichtung ausgestaltet ist, das erwartete Detektionsergebnis mit einem tatsächlichen Detektionsergebnis der Sensoreinrichtung zu vergleichen.

Die Vergleichseinrichtung kann auf beliebige geeignete Weise mit der Sensoreinrichtung und der Berechnungseinrichtung verbunden sein. Z. B. können die Einrichtungen drahtlos, insbesondere über eine Funkverbindung, Lichtsignalverbindung und/oder eine Ultraschallverbindung, miteinander verbunden sein.

Außerdem kann eine Fehler-Ermittlungseinrichtung vorgesehen sein, die mit der Vergleichseinrichtung verbunden ist und die ausgestaltet ist, abhängig von dem Ergebnis der Vergleichseinrichtung einen Fehler des Messobjekts festzustellen. Insbesondere liegt dann ein Fehler des Messobjekts vor, wenn eine signifikante, einen Grenzwert überschreitende Abweichung zwischen dem erwarteten Detektionsergebnis und dem tatsächlichen Detektionsergebnis ermittelt wurde.

Insbesondere kann die Messanordnung Teil einer Fertigungsanlage zur Serienfertigung von Werkstücken sein, wobei einzelne oder alle der gefertigten Werkstücke mit der Messanordnung vermessen werden und gemäß dem beschriebenen Verfahren festgestellt werden kann oder wird, ob ein Fehler vorliegt. Dies dient insbesondere der Qualitäts- bzw. Produktionsüberwachung und -sicherung. Dabei kann ein Messplatz der Messanordnung, auf dem das Werkstücke mittels der invasiven Strahlung untersucht werden kann, unmittelbar auf einem Weg liegen, den alle gefertigten Werkstücke durchlaufen müssen (wobei auch dann optional nur ausgewählte Werkstücke untersucht werden können oder alle Werkstücke untersucht werden können) und/oder können die mit der Messanordnung zu untersuchenden Werkstücke automatisch aus der Fertigungslinie ausgesondert werden und zu der Messanordnung transportiert werden. "

Ferner gehört zum Umfang der Erfindung ein Computerprogramm, das bei Ablauf auf einem Computer oder Computer Netzwerk zumindest diejenigen Teile des erfindungsgemäßen Verfahrens in einer seiner Ausgestaltungen ausführt, die die Ermittlung des erwarteten Detektionsergebnisses und/oder die Auswertung des gemessenen Detektionsergebnisses und dessen Vergleich betreffen.

Weiterhin gehört zum Umfang der Erfindung ein Computerprogramm mit Programmcode-Mitteln, um das in dem vorangegangenen Absatz definierte Verfahren in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger gespeichert sein.

Außerdem gehört zum Umfang der Erfindung ein Datenträger, auf dem eine Datenstruktur gespeichert ist, die nach einem Laden in einen Arbeits- und/oder Hauptspeicher eines Computers oder Computer-Netzwerkes das Verfahren in einer seiner Ausgestaltungen ausführen kann.

Auch gehört zum Umfang der Erfindung ein Computerprogramm-Produkt mit auf einem maschinenlesbaren Träger gespeicherten Programmcode-Mitteln, um das Verfahren in einer seiner Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Die Erfindung wird nun unter Bezugnahme auf die Zeichnung anhand von Ausführungsbeispielen beschrieben. Die Erfindung ist jedoch nicht auf die ' Ausführungsbeispiele beschränkt. Einzelne Merkmale der folgenden Beschreibung oder beliebige Kombinationen davon können mit den zuvor beschriebenen Ausgestaltungen der Erfindung kombiniert werden. Die einzelnen Figuren der Zeichnung zeigen:

Fig. 1    eine Anordnung zum Untersuchen eines Messobjekts mittels invasiver Strahlung;

Fig. 2    ein schematisches Flussdiagramm zur Darstellung eines Ausführungsbeispiels, bei dem eine Mehrzahl von erwarteten Detektionsergebnissen berechnet und ausgewertet wird, und

Fig. 3    eine vereinfachte Darstellung, um die Berechnung eines erwarteten Detektionsergebnisses zu veranschaulichen.

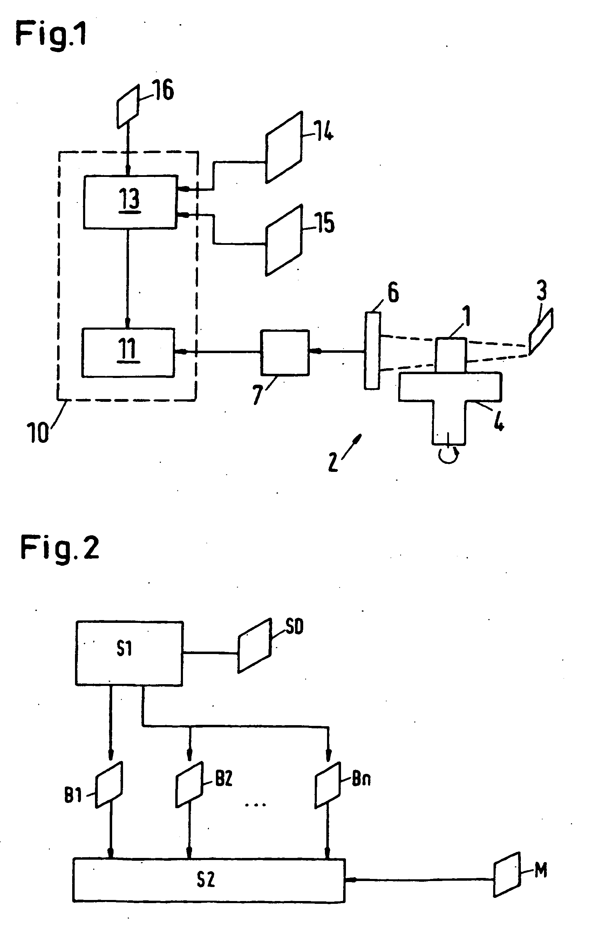

Die in Fig. 1 dargestellte Anordnung weist eine Messeinrichtung 2 auf, mit der ein Messobjekt 1 mittels invasiver Strahlung vermessen werden kann.

Die Messeinrichtung 2 weist beispielsweise eine Röntgenquelle 3 zur Erzeugung von Röntgenstrahlung und zum Richten eines kegelförmigen Röntgenstrahlungsbündels auf das Messobjekt 1 auf. Die Begrenzungen des Strahlungsbündels sind in Fig. 1 durch gestrichelte Linien dargestellt. Die Röntgenstrahlung tritt durch das Messobjekt 1 hindurch und trifft in geschwächter Intensität auf eine Sensoreinrichtung 6. Hauptursache für die Schwächung der Röntgenstrahlung ist die Absorption in dem Material des Messobjekts 1. Weiterhin wird die Röntgenstrahlung in dem Messobjekt 1 gestreut. Dabei gelangt ein Anteil der gestreuten Strahlung wiederum auf die Sensoreinrichturig 6.

Die Sensoreinrichtung 6 besteht in dem Ausführungsbeispiel aus einer n x m Matrix von Sensorelementen, die für die Röntgenstrahlung empfindlich sind. Dabei sind n, m positive ganze Zahlen und bezeichnen die Anzahl der Zeilen und Spalten, in denen die einzelnen Sensorelemente angeordnet sind. Jedes der Sensorelemente liefert, abhängig von der Summe (Menge) der einfallenden Strahlung oder abhängig von der Intensität der einfallenden Strahlung, ein Messsignal, das von signaltechnisch nachgeschalteten Komponenten, auf die noch näher eingegangen wird, weiterverarbeitet wird.

Das Messobjekt 1 ist in dem Ausführungsbeispiel auf einem Drehtisch 4 angeordnet, der während des Messvorgangs um seine vertikale Achse gedreht wird, wie es durch einen entsprechenden Pfeil in Fig. 1 angedeutet ist.

Dementsprechend liefert die Sensoreinrichtung 6 örtlich zweidimensionale Röntgenbilder von verschiedenen Drehpositionen des Messobjekts 1. Entsprechende Ausgangssignale der Sensoreinrichtung 6 werden über eine Signalverbindung zu einer Korrektureinrichtung 7 übertragen, die eine Untergrund- und Verstärkungsfaktorkorrektur für jedes einzelne der Signale der Sensorelemente durchführt. Ausgangsseitig ist die Korrektureinrichtung 7 mit einer Vergleichseinrichtung 11 verbunden, welche wiederum Bestandteil einer Auswertungseinrichtung 10 ist. Über die entsprechende Verbindung zwischen der Korrektureinrichtung 7 und der Vergleichseinrichtung 11 werden die korrigierten Sensorsignale, und zwar ortsaufgelöst (entsprechend den Matrixelementen der Sensoreinrichtung 6) und zeitaufgelöst (entsprechend den in den verschiedenen Drehstellungen des Drehtischs 4 aufgenommenen Röntgenbildern) zu der Vergleichseinrichtung 11 übertragen.

Mit dem Bezugszeichen 14 ist in Fig. 1 ein Datensatz mit Geometriedaten einer Sollgeometrie des Messobjekts 1 bezeichnet. Unter Sollgeometrie wird verstanden, dass das Messobjekt 1 die entsprechende Geometrie, d.h. Form, aufweisen soll. Dies ist jedoch in der Praxis häufig nicht der Fall, da bei der Herstellung des Messobjekts 1 (an der Oberfläche und/oder im Messobjekt) Fehler aufgetreten sein können oder die Form des Messobjekts 1 aus anderen Gründen von der Sollgeometrie abweichen kann, etwa aufgrund einer Beschädigung oder Abnutzung.

Mit dem Bezugszeichen 15 sind Materialeigenschaftsdaten des Sollzustandes des Messobjekts 1 bezeichnet. Vorzugsweise enthalten die Materialeigenschaftsdaten 15 außerdem den Bezug zu dem jeweiligen Ort im Koordinatensystem der Sollgeometrie, an dem die jeweilige Materialeigenschaft vorliegt. Insbesondere handelt es sich bei den Materialeigenschaften um den Absorptionskoeffizienten des jeweiligen Materials für die in der Messeinrichtung 2 verwendete Röntgenstrahlung und um den Wirkungsquerschnitt für die Streuung dieser Röntgenstrahlung. Dabei sind gegebenenfalls, wenn das Messobjekt 1 aus verschiedenen Materialien besteht, die Materialeigenschaften für alle Materialien des Sollzustandes des Messobjektes 1 angegeben.

Die Geometriedaten 14 und die Materialeigenschaftsdaten 15 sind Eingangsdaten für eine Berechnungseinrichtung 13, die Teil der Auswertungseinrichtung 10 ist. Dabei ist die Auswertungseinrichtung 10 nicht zwangsläufig eine gerätetechnische Einheit. Vielmehr kann die Berechnungseinrichtung 13 separat von der Vergleichseinrichtung 11 angeordnet sein und kann beispielsweise vorab, d.h. vor Ausführung der ersten Messung an einem Messobjekt ihre Funktion erfüllen, so dass lediglich ein entsprechendes Berechnungsergebnis vorliegt und von der Vergleichseinrichtung 11 verwendet wird. Die Berechnungseinrichtung 13 ist ausgestaltet, aus den Geometriedaten und den Materialeigenschaftsdaten erwartete Messwerte der Sensorelemente der Sensoreinrichtung 6 zu berechnen, unter der Annahme, dass das Messobjekt 1 der Sollgeometrie und dem Sollzustand entspricht. Dabei kann außerdem optional eine Toleranz der Sollgeometrie und der Materialeigenschaften berücksichtigt werden. Um die erwarteten Messwerte korrekt für den Sollzustand und die Sollgeometrie berechnen zu können, sind Außerdem Messparameterdaten 16 als Eingangsdaten der Berechnungseinrichtung 13 vorgesehen. Die Messparameterdaten enthalten Informationen über Eigenschaften der Messung, insbesondere örtliche Auflösung der Sensoreinrichtung 6, Belichtungszeit (d.h. Bestrahlungszeit für die Aufnahme eines einzelnen Röntgenbildes durch die Sensoreinrichtung 6), Energie bzw. Wellenlänge oder Frequenz und/ oder die entsprechende Energie-, Wellenlängen- oder Frequenzverteilung der verwendeten Röntgenstrahlung, Geometrie der Anordnung der Röntgenquelle 3 und der Sensoreinrichtung 6, Öffnungswinkel der Röntgenquelle 3 bzw. Größe und Intensitätsverteilung des Strahlungskegels, der von der Röntgenquelle 3 ausgeht, und/oder weitere Parameter, die gegebenenfalls bei einer konkreten Messanordnung erforderlich sind, um das erwartete Messsignal jedes einzelnen Sensorelements für die Sollgeometrie und den Sollzustand voraussagen zu können.

Die Messparameterdaten können optional für eine Mehrzahl möglicher Vermessungen des Messobjekts vorhanden sein und die Berechnungseinrichtung kann die Berechnung des erwarteten Detektionsergebnisses jeweils für die verschiedenen möglichen Vermessungen durchführen.

Grundsätzlich, losgelöst von dem konkreten Ausführungsbeispiel der Erfindung, können auch Vermessungen des Messobjekts durchgeführt werden, bei einzelne oder mehrere der in dieser Beschreibung genannten Messparameter der andere Messparameter örtlich (bezogen auf den Ort in dem Messeobjekt oder auf den Ort der Sensoreinrichtung) und/oder zeitlich variiert werden. Insbesondere kann bei der oben beschriebenen Planung der Vermessung unter, Berücksichtigung erwarteter Messergebnisse auch die Variation des oder der Messparameter optimiert werden.

Ergebnisse der Berechnungseinrichtung 13 werden über eine entsprechende Signalleitung der Vergleichseinrichtung 11 zugeführt. Alternativ oder zusätzlich werden die Ergebnisse in einem in Fig. 1 nicht dargestellten Datenspeicher abgelegt, aus dem die Vergleichseinrichtung 11 die Ergebnisse bei Bedarf abrufen kann. Bei der Berechnungseinrichtung 13 und bei der Vergleichseinrichtung 11 kann es sich jeweils um ein Cluster von leistungsfähigen Computern handeln. In den meisten Fällen reicht es für die verhältnismäßig schnell und einfach ausführbaren Rechenoperationen der Vergleichseinrichtung 11 aus, wenn die Vergleichseinrichtung durch einen einzigen handelsüblichen Personal Computer (PC) und die entsprechende Software realisiert ist. Lediglich im Fall einer zusätzlichen Rückprojektion nach Feststellung eines Fehlers (siehe oben im allegemeinen Teil der Beschreibung) werden leistungsfähigere Recheneinrichtungen benötigt bzw. sind solche leistungsfähigen Einrichtungen vorteilhaft, um das Ergebnis in angemessener Zeit zu erhalten.

Insbesondere sind die Geometriedaten 14 und die Materialeigenschaftsdaten 15 räumlich dreidimensionale Daten, die z.B. auf ein objekteigenes Koordinatensystem der Sollgeometrie bezogen sind. So können die Daten jeweils z.B. auf die drei Koordinaten eines kartesischen Koordinatensystems bezogen sein, dessen Ursprung bezüglich des Objekts festliegt. Bei Objekten mit unterschiedlichen Materialien kann optional zusätzlich die Information in den Geometriedaten enthalten sein, welcher Materialbereich aus welchem Material gefertigt sein soll. Diese Zusatzinformation ist beispielsweise ebenfalls dem jeweiligen Koordinatenpunkt oder Volumenelement in dem Koordinatensystem zugeordnet. Die Berechnungseinrichtung kann hieraus z.B. ein dreidimensionales Modell des Sollobjekts erstellen, aus dem für jeden Fall der Anordnung des Messobjekts, der Strahlungsquelle und der Sensoreinrichtung die erwarteten Messwerte der Sensorelemente ermittelt werden können.

Losgelöst von dem konkreten Ausführungsbeispiel ist es ein weiterer Vorteil der Erfindung, dass aufgrund der Tatsache, dass vorab erwartete Messwerte berechnet werden, auch die Messbereiche der Messeinrichtung optimal genutzt werden können. Beispielsweise kann vorab bestimmt werden, ob ein erwarteter Messwert einen hohen oder einen niedrigen Messfehler haben wird, etwa weil der Messwert im Verhältnis zu dem abzuziehenden Untergrundswert zu klein ist oder ausreichend groß ist. Dementsprechend kann z.B. die Belichtungszeit angepasst werden. Diese Auswertung, ob die Messeinrichtung optimal betrieben wird, kann beispielsweise automatisch durch Auswertung der Berechnungsergebnisse der Berechnungseinrichtung erfolgen. In Erweiterung dieses Gedankens können auch Mehrfachbelichtungen mit z.B. verschiedenen Belichtungszeiten vorgenommen werden und/oder Strahlung mit unterschiedlichen Wellenlängen verwendet werden. Auch ist es möglich, alternativ oder zusätzlich andere Arten von invasiver Strahlung zu verwenden und/oder verschiedene Arten zu kombinieren, beispielsweise Partikelstrahlen und Röntgenstrahlen oder, bei Messobjekten mit einer Durchlässigkeit für sichtbare Strahlung, Strahlung verschiedener Farben. Außerdem können so entsprechend Messungen mit verschiedenen Detektoren vorgeplant und optimiert werden. Beispielsweise kann eine Sensoreinrichtung wie in Fig. 1 dargestellt für die Messung der Extinktion bei der Durchstrahlung des Messobjekts vorgesehen sein und kann zusätzlich ein Detektor für die Messung der gestreuten Strahlung und/oder die Messung von Sekundäreffekten vorgesehen sein. Auch kann eine Sensoreinrichtung für die Messung von Strahlung vorgesehen sein, die an Oberflächen des Messobjektes reflektiert und/oder gestreut wird.

Ein weiterer Vorteil der Erfindung liegt daher darin, dass für die Berechnung der erwarteten Messergebnisse ein verhältnismäßig hoher Aufwand betrieben werden kann, bei dem z.B. die in dem vorangegangenen Absatz beschriebenen komplizierten physikalischen Vorgänge berücksichtigt werden können. Daher kann das Berechnungsergebnis sehr genau sein. Vorzugsweise wird das Ergebnis der Berechnungseinrichtung vorab oder wiederholt nach der Vermessung von Messobjekten durch Vermessung eines Meisterteils überprüft, das möglichst exakt der Sollgeometrie und dem Sollzustand entspricht.

Die zuvor erwähnte Optimierung der Planung der Messung durch Auswertung der Berechnungsergebnisse der Berechnungseinrichtung ist insbesondere dann vorteilhaft, wenn das Messobjekt zwei oder mehr unterschiedliche Materialien aufweist, die zumindest für eine bestimmte invasive Strahlung nur geringfügig unterschiedliche Absorptions- oder Streueigenschaften haben. Insbesondere wenn noch ein drittes Material mit deutlich unterschiedlichen Strahlungseigenschaften vorhanden ist, könnte andernfalls der Unterschied zwischen den beiden hinsichtlich ihrer Strahlungseigenschaften ähnlichen Materialien in einer Messung mit nur einer Strahlungsart und einmaliger Belichtung nicht ausreichend erkennbar werden.

Ein weiteres Mittel zur Optimierung der Messung, das unabhängig oder in Kombination mit den zuvor beschriebenen Maßnahmen angewendet werden kann, ist die Einstellung der Verstärkung der Detektorsignale abhängig von dem Berechnungsergebnis der Berechnungseinrichtung (d.h. abhängig von den erwarteten Messwerten).

Vorzugsweise werden die zuvor erwähnten Messparameter und/oder weitere Messparameter, wie z.B. Informationen über die Gleichmäßigkeit der Detektionseigenschaften der Serisorelemente, von der Messeinrichtung ermittelt und zu der Vergleichseinrichtung übertragen. Auf diese Weise kann das zugehörige Berechnungsergebnis ausgewählt werden, falls mehrere Berechnungsergebnisse vorhanden sind. Außerdem kann die Vergleichseinrichtung und/oder die Berechnungseinrichtung kontrollieren, ob die Ergebnisse der Berechnungseinrichtung für das tatsächlich ausgeführte Messverfahren passend sind und ein sinnvoller Vergleich durchgeführt werden kann.

Die Optimierung der Messparameter abhängig, von dem Ergebnis der Berechnungseinrichtung, kann auch individuell und verschieden für unterschiedliche Orientierungen bzw. Drehstellungen (im Allgemeinen für unterschiedliche Anordnungen des Messobjektes relativ zu der Strahlungsquelle und/oder relativ zu der Sensoreinrichtung) vorgenommen werden. Weiterhin ist es möglich, aus der Mehrzahl von Berechnungsergebnissen eine oder mehrere Anordnungen des Messobjekts auszuwählen, mit denen die gewünschte Untersuchung am schnellsten und/oder am deutlichsten durchgeführt werden kann. Z. B. gibt es konkrete Anordnungen, in denen ein Fehler besonders gut erkennbar ist.

Eine weitere vorteilhafte Ausgestaltung des erfindungsgemäßen Verfahrens betrifft die Bewertung der Qualität des Messobjekts bei Abweichungen von dem Sollzustand und/oder der Sollgeometrie. Die Berechnungseinrichtung kann die Berechnung der erwarteten Messwerte für unterschiedliche Abweichungen von dem Sollzustand und der Sollgeometrie vornehmen und die entsprechenden einzelnen Berechnungsergebnisse können mit dem Messergebnis verglichen werden. Insbesondere ist es möglich, häufig vorkommende oder besonders erwartete Fehler des Messobjektes vorab zu simulieren und ein entsprechendes erwartetes Messergebnis zu berechnen. Auf diese Weise kann durch die Bestimmung, welchem der berechneten Messergebnisse das tatsächlich aus der Messung erhaltene Messergebnis am ähnlichsten ist, ermittelt werden, welcher Fehler vorliegt und/oder wie stark die Qualität beeinträchtigt ist. Es kann daraus optional auch ein Bewertungsmaß auf einer Bewertungsskala ermittelt werden, wobei z. B. am einen Ende der Skala eine vollständige Übereinstimmung zwischen Sollzustand und Sollgeometrie einerseits und dem Messobjekt andererseits vorliegt und wobei sich der Grad der Abweichungen im Verlauf der Skala verstärkt.

Fig. 2 zeigt ein entsprechendes Ausführungsbeispiel. Solldaten SD werden in Schritt S1 zur Berechnung verschiedener Berechnungsergebnisse B1, B2, ... Bn mit unterschiedlichen Abweichungen von dem Sollzustand und der Sollgeometrie verwendet. Dabei ist n eine positive ganze Zahl und sind die Berechnungsergebnisse B1, B2, ... Bn entsprechend ihrem Grad der Abweichung vom Sollzustand und der Sollgeometrie geordnet. Das Berechnungsergebnis B1 entspricht dabei dem Idealzustand. Das Berechnungsergebnis Bn entspricht bereits einer nicht mehr akzeptablen Qualität, da die Abweichung zum Idealzustand sehr groß ist.

In Schritt S2 wird nun das Ergebnis einer Vermessung des Messobjekts, z.B. in der anhand von Fig. 1 beschriebenen Messanordnung 2, mit den Berechnungsergebnissen B verglichen. Das am besten übereinstimmende Berechnungsergebnis B wird ermittelt und die entsprechende Qualität (z.B. "3" für eine Übereinstimmung mit dem Berechnungsergebnis B3) wird ausgegeben. Beim Vergleich der Berechnungsergebnisse B mit dem Messergebnis M wird beispielsweise dasjenige Berechnungsergebnis B ermittelt, dessen Summe der Quadrate der Abweichungen der einzelnen Messwerte minimal ist. Dabei werden unter den einzelnen Messwerten der jeweilige erwartete Messwert und der zugehörige berechnete Messwert für ein einzelnes Sensorelement (oder für einen einzelnen Punkt oder Flächenbereich der örtlich auflösenden Sensoreinrichtung) verstanden.

Ein weiterer Vorteil des erfindungsgemäßen Verfahrens besteht darin, dass die eigentliche Messung bzw. Vermessung des Messobjekts auf eine geringe Anzahl von Drehstellungen bzw. relativen Positionen zu der Strahlungsquelle und der Sensoreinrichtung beschränkt werden kann. Insbesondere können (wie oben bereits angedeutet) wiederum unter Berücksichtigung des Berechnungsergebnisses der Berechnungseinrichtung diejenigen Anordnungen des Messobjekts relativ zu der Strahlungsquelle und der Sensoreinrichtung ausgewählt werden, die besonders aussage kräftig sind. Beispielsweise werden solche relativen Anordnungen ausgewählt, in der bestimmte erwartete Fehler am besten zu erkennen sind. So kann z. B. die Lage einer Bohrung innerhalb des Messobjekts in einer bestimmten Drehstellung am besten zu erkennen sein.

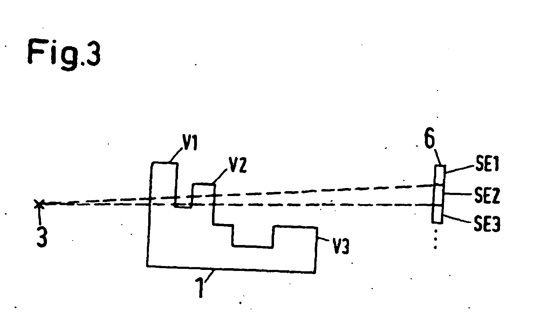

Im Folgenden soll auf ein Ausführungsbeispiel der Berechnung des erwarteten Messwertes für ein einzelnes Sensorelement eingegangen werden. Hierzu wird auf Fig. 3 Bezug genommen. In der Figur ist eine Strahlungsquelle 3 idealer Weise als punktförmig dargestellt: Die von der Strahlungsquelle 3 ausgehende invasive Strahlung durchdringt das Messobjekt 1 und trifft auf die Sensoreinrichtung 6. Bei dem Messobjekt 1, der Strahlungsquelle 3 und der Sensoreinrichtung 6 kann es sich um die dieselben Objekte beziehungsweise Einrichtungen wie in Fig. 1 oder um andere Objekte beziehungsweise Einrichtungen handeln.

Die Sensoreinrichtung 6 weist eine Mehrzahl von Sensorelementen SE auf, die mit SE1, SE2, SE3,... bezeichnet sind. Das Messobjekt 1 weist eine Mehrzahl von Vorsprüngen V1, V2, V3 auf. Die von der Strahlungsquelle 3 ausgehende Strahlung, welche bei geradliniger Strahlungsausbreitung auf das Sensorelement SE2 trifft, durchdringt lediglich die Vorsprünge V1, V2, nicht aber den darunter liegenden Hauptbereich oder den Vorsprung V3 des Messobjekts 1. Zur Berechnung des auf geradliniger Strahlungsausbreitung und Absorption von Strahlung in dem Messobjekt 1 beruhenden Messwertes des Sensorelements SE2 wird ein Pfadintegral berechnet. Im speziellen Fall eines Werkstücks aus einem einzigen, homogenen Material ergibt die Integration das Absorptionsgesetz:

$$I = I0 * \exp(-\mu * x) \qquad\qquad \text{(Gleichung 1)}$$

Dabei bezeichnen I die auf das Sensorelement in einem gegebenen Zeitintervall auftreffende Strahlungstärke, I0 die von der Strahlungsquelle in dem Zeitintervall in Richtung des Sensorelements emittierte Strahlung, exp die Exponentialfunktion mit der Basis e (Eulersche Zahl), x die Ortsvariable entlang dem Ausbreitungsweg der Strahlung und $\mu$ den Absorptionskoeffizienten für die Absorption der Strahlung in dem Material.

Die Integration, die zu der Gleichung 1 führt, wird in dem Beispiel von Fig. 3 lediglich über die Breite der Vorsprünge V1, V2 ausgeführt. In der Praxis kann dies dadurch erreicht werden, dass ein numerisches Integrationsverfahren über die gesamte Pfadlänge der Strahlung durchgeführt wird und der Absorptionskoeffizient für die Bereiche auf dem Strahlungsweg zwischen der Strahlungsquelle 3 und dem Sensorelement SE2, die außerhalb der Vorsprünge liegen, auf Null gesetzt wird.

Für die meisten Fälle reicht es aus, wenn lediglich die Absorption von Röntgenstrahlung berücksichtigt wird, insbesondere dann, wenn ein größerer Abstand zwischen der Sensoreinrichtung und dem Messobjekt eingehalten wird, sodass die auf Streuung in dem Messobjekt zurückzuführenden Effekte gering sind.

**Patentansprüche**

1.  Verfahren zum Untersuchen eines Messobjekts (1), wobei

    - das Messobjekt (1) invasiver Strahlung ausgesetzt wird,
    - eine Wechselwirkung der invasiven Strahlung mittels einer strahlungsempfindlichen Sensoreinrichtung (6) detektiert wird,
    - ein erwartetes Detektionsergebnis der Sensoreinrichtung (6) unter Verwendung einer Sollgeometrie des Messobjekts (1) und unter Verwendung von Materialeigenschaften berechnet wird und/oder ein erwartetes Detektionsergebnis durch Vermessung zumindest eines Meisterteils ermittelt wird und
    - das erwartete Detektionsergebnis mit einem tatsächlichen Detektionsergebnis der Sensoreinrichtung (6) verglichen wird,

    **dadurch gekennzeichnet, dass** eine Mehrzahl von erwarteten Detektionsergebnissen berechnet wird, wobei

    - jedes der erwarteten Detektionsergebnisse einer verschiedenen Position und/oder Ausrichtung des Messobjekts (1) relativ zu der Strahlungsquelle (3) und/oder relativ zu der Sensoreinrichtung (6) entspricht und/oder
    - jedes der erwarteten Detektionsergebnisse verschiedenen Werten eines anderen Messparameters entspricht, wobei der andere Messparamter ein Messparameter einer Messanordnung ist, mit der das Messobjekt vermessen wird, wie z. B. Wellenlänge der invasiven Strahlung, örtliche Auflösung der Sensoreinrichtung (6), Belichtungszeit, d.h. Bestrahlungszeit für die Aufnahme eines einzelnen Röntgenbildes durch die Sensoreinrichtung (6), Energie bzw. Wellenlänge oder Frequenz und/oder die entsprechende Energie-, Wellenlängen- oder Frequenzverteilung der verwendeten Röntgenstrahlung, Geometrie der Anordnung der Röntgenquelle und der Sensoreinrichtung (6), Öffnungswinkel der Röntgenquelle bzw. Größe und Intensitätsverteilung des Strahlungskegels, der von der Röntgenquelle ausgeht, Informationen über die Gleichmäßigkeit der Detektionseigenschaften von Sensorelementen,

wobei durch einen Vergleich der verschiedenen erwarteten Detektionsergebnisse mit dem tatsächlichen Detektionsergebnis ermittelt wird, welches der erwarteten Detektionsergebnisse am besten mit dem tatsächlichen Detektionsergebnis übereinstimmt, und wobei daraus Informationen über die Position und/oder Ausrichtung des Messobjekts (1) relativ zu der Strahlungsquelle (3) und/oder relativ zu der Sensoreinrichtung (6) abgeleitet werden und/oder Informationen über einen Wert des anderen Messparameters abgeleitet werden.

2. Verfahren nach dem vorhergehenden Anspruch, wobei Sensorsignale der Sensoreinrichtung (6) automatisch digitalisiert werden, sodass das tatsächliche Detektionsergebnis in digitalisierter Form zum Vergleich mit dem erwarteten Detektionsergebnis zur Verfügung steht.

3. Verfahren nach einem der vorhergehenden Ansprüche, wobei das Messobjekt (1) aus verschiedenen Richtungen und/oder in verschiedenen Drehstellungen der invasiven Strahlung ausgesetzt wird und jeweils ein Detektionsergebnis festgestellt wird, wobei jedes der Detektionsergebnisse mit einem erwarteten Detektionsergebnis verglichen wird und wobei aus Abweichungen der tatsächlichen Detektionsergebnisse von den erwarteten Detektionsergebnissen der Ort eines Fehlers in dem Messobjekts (1) ermittelt wird.

4. Verfahren nach dem vorhergehenden Anspruch, wobei die Detektionsergebnisse jeweils als Felder von Detektionswerten erzeugt werden, wobei jeweils die tatsächlichen Detektionswerte und die zugehörigen erwarteten Detektionswerte miteinander verglichen werden, insbesondere voneinander subtrahiert werden, und aus daraus resultierenden Feldern von Vergleichswerten durch eine tomografische Rückprojektion ein örtlich dreidimensionales Fehlermodell des Messobjekts (1) erzeugt wird.

5. Verfahren nach einem der vorhergehenden Ansprüche, wobei die Sensoreinrichtung (6) eine Vielzahl von separaten örtlichen Bereichen aufweist, sodass in den einzelnen örtlichen Bereichen auftreffende Strahlung in ein eigenständiges Messsignal umgewandelt werden, und wobei für jeden der örtlichen Bereiche ein erwartetes Detektionsergebnis erzeugt und mit einem aus dem Messsignal des örtlichen Bereichs erzeugten gemessenen Detektionsergebnis verglichen wird.

6. Verfahren nach einem der vorhergehenden Ansprüche, wobei vor einer Vermessung des Messobjekts (1) ein erwartetes Detektionsergebnis berechnet wird und das erwartete Detektionsergebnis ausgewertet wird, um Messparameter bei der Vermessung des Messobjekts (1) und/oder eine Art der Vermessung des Messobjekts (1) zu wählen.

7. Verfahren nach einem der vorhergehenden Ansprüche, wobei zumindest ein zweites erwartetes Detektionsergebnis berechnet wird, wobei das zweite Detektionsergebnis einem gegenüber der Sollgeometrie und/oder den erwarteten Materialeigenschaften veränderten Zustand entspricht, der noch in einem zulässigen Bereich liegt, und wobei durch Vergleich des zweiten erwarteten Detektionsergebnisses mit dem tatsächlichen Detektionsergebnis ermittelt wird, ob das tatsächliche Detektionsergebnis noch in dem zulässigen Bereich liegt.

8. Anordnung zum Untersuchen eines Messobjekts (1), wobei die Anordnung Folgendes aufweist:

- eine Strahlungsquelle (3) zur Erzeugung invasiver Strahlung,
- eine Sensoreinrichtung (6) zur Messung eines Ergebnisses einer Wechselwirkung der invasiven Strahlung mit dem Messobjekt (1),
- eine Berechnungseinrichtung (13) zur Berechnung einer Mehrzahl von erwarteten Detektionsergebnisses der Sensoreinrichtung (6) unter Verwendung einer Sollgeometrie des Messobjekts (1) und unter Verwendung von Materialeigenschaften und/oder eine Speichereinrichtung zur Speicherung einer Mehrzahl von erwarteten Detektionsergebnissen, die durch Vermessung zumindest eines Meisterteils ermittelt werden oder wurden, wobei jedes der erwarteten Detektionsergebnisse einer verschiedenen Position und/oder Ausrichtung des Messobjekts (1) relativ zu der Strahlungsquelle (3) und/oder relativ zu der Sensoreinrichtung (6) entspricht und/oder jedes der erwarteten Detektionsergebnisse verschiedenen Werten eines anderen Messparameters entspricht, wobei der andere Messparamter ein Messparameter einer Messanordnung ist, mit der das Messobjekt vermessen wird, wie z. B. Wellenlänge der invasiven Strahlung, örtliche Auflösung der Sensoreinrichtung (6), Belichtungszeit, d.h. Bestrahlungszeit für die Aufnahme eines einzelnen Röntgenbildes durch die Sensoreinrichtung (6), Energie bzw. Wellenlänge oder Frequenz und/oder die entsprechende Energie-, Wellenlängen- oder Frequenzverteilung der verwendeten Röntgenstrahlung, Geometrie der Anordnung der Röntgenquelle und der Sensoreinrichtung (6), Öffnungswinkel der Röntgenquelle bzw. Größe und Intensitätsverteilung des Strahlungskegels, der von der Röntgenquelle ausgeht, Informationen über die Gleichmäßigkeit der Detektionseigenschaften von Sensorelementen, und

- eine Vergleichseinrichtung (11), die mit der Sensoreinrichtung (6) und der Berechnungseinrichtung (13) verbunden ist und/oder die mit der Sensoreinrichtung (6) und der Speichereinrichtung verbunden ist, wobei die Vergleichseinrichtung (11) ausgestaltet ist, die Mehrzahl von erwarteten Detektionsergebnissen mit dem tatsächlichen Detektionsergebnis zu vergleichen,

wobei die Anordung ausgestaltet ist zu ermitteln, welches der erwarteten Detektionsergebnisse am besten mit dem tatsächlichen Detektionsergebnis der Sensoreinrichtung (6) übereinstimmt, und daraus Informationen über die Position und/oder Ausrichtung des Messobjekts (1) relativ zu der Strahlungsquelle (3) und/oder relativ zu der Sensoreinrichtung (6) abzuleiten und/oder Informationen über einen Wert des anderen Messparameters abzuleiten.

## Claims

1. Method for examining a measurement object (1), in which

   - the measurement object (1) is exposed to invasive radiation,
   - an interaction of the invasive radiation is detected by means of a radiation-sensitive sensor device (6),
   - an expected detection result of the sensor device (6) is calculated by using a desired geometry of the measurement object (1) and by using material properties, and/or an expected detection result is determined by measuring at least one master part, and
   - the expected detection result is compared with an actual detection result of the sensor device (6),

   **characterized in that** a plurality of expected detection results is calculated,

   - each of the expected detection results corresponding to a different position and/or alignment of the measurement object (1) relative to the radiation source (3) and/or relative to the sensor device (6), and/or
   - each of the expected detection results corresponding to different values of another measurement parameter, the other measurement parameter being a measurement parameter of a measuring arrangement with the aid of which the measurement object is measured, such as, for example, wavelength of the invasive radiation, spatial resolution of the sensor device (6), exposure time, that is to say irradiation time for the recording of an individual X-ray image by the sensor device (6), energy and/or wavelength or frequency and/or the corresponding distribution of energy, wavelength or frequency of the X-radiation used, geometry of the arrangement of the X-ray source and of the sensor device (6), opening angle of the X-ray source and/or size and intensity distribution of the radiation cone that emanates from the X-ray source, and information relating to the uniformity of the detection properties of sensor elements,

   it being determined by a comparison of the various expected detection results with the actual detection result which of the expected detection results corresponds best to the actual detection result, and therefrom information relating to the position and/or alignment of the measurement object (1) relative to the radiation source (3) and/or relative to the sensor device (6) being derived, and/or information relating to a value of the other measurement parameter being derived.

2. Method according to the preceding claim, in which sensor signals of the sensor device (6) are automatically digitized such that the actual detection result is available in digitized form for comparison with the expected detection result.

3. Method according to one of the preceding claims, in which the measurement object (1) is exposed to the invasive radiation from various directions and/or in various rotational positions and a detection result is respectively established, each of the detection results being compared with an expected detection result, and the location of a defect in the measurement object (1) being determined from deviations in the actual detection results from the expected detection results.

4. Method according to the preceding claim, in which the detection results are respectively produced as fields of detection values, the actual detection values and the associated expected detection values respectively being compared with one another, in particular being subtracted from one another, and a spatially three-dimensional defect model of the measurement object (1) being produced from fields of comparative values resulting therefrom by means of a tomographic back projection.

5. Method according to one of the preceding claims, in which the sensor device (6) has a multiplicity of separate spatial areas such that invasive radiation striking in the individual spatial areas is converted into an independent measurement signal, and in which, for each of the spatial areas, an expected detection result is produced and is compared with a measured detection result produced from the measurement signal of the spatial area.

6. Method according to one of the preceding claims, in which, before the measurement object (1) is measured, an expected detection result is calculated and the expected detection result is evaluated in order to select measurement parameters for measuring the measurement object (1) and/or to select a type of measurement of the measurement object (1).

7. Method according to one of the preceding claims, in which at least one second expected detection result is calculated, the second detection result corresponding to a state that is changed with respect to the desired geometry and/or the expected material properties and still lies in a permissible range, and it being determined by comparing the second expected detection result with the actual detection result whether the actual detection result still lies in the permissible range.

8. Arrangement for examining a measurement object (1), in which the arrangement exhibits the following:

- a radiation source (3) for producing invasive radiation,
- a sensor device (6) for measuring a result of an interaction of the invasive radiation with the measurement object (1),
- a calculating device (13) for calculating a plurality of expected detection results of the sensor device (6) by using a desired geometry of the measurement object (1) and by using material properties, and/or a memory device for storing a plurality of expected detection results that are or have been determined by measuring at least one master part, and each of the expected detection results corresponding to a different position and/or alignment of the measurement object (1) relative to the radiation source (3) and/or relative to the sensor device (6), and/or each of the expected detection results corresponding to different values of another measurement parameter, the other measurement parameter being a measurement parameter of a measuring arrangement with the aid of which the measurement object is measured, such as, for example, wavelength of the invasive radiation, spatial resolution of the sensor device (6), exposure time, that is to say irradiation time for the recording of an individual X-ray image by the sensor device (6), energy and/or wavelength or frequency and/or the corresponding distribution of energy, wavelength or frequency of the X-radiation used, geometry of the arrangement of the X-ray source and of the sensor device (6), opening angle of the X-ray source and/or size and intensity distribution of the radiation cone that emanates from the X-ray source, information relating to the uniformity of the detection properties of sensor elements, and
- a comparing device (11) that is connected to the sensor device (6) and to the calculating device (13), and/or that is connected to the sensor device (6) and the memory device, the comparing device (11) being configured to compare the plurality of expected detection results with the actual detection result,

the arrangement being configured to determine which of the expected detection results corresponds best to the actual detection result of the sensor device (6), and to derive therefrom information relating to the position and/or alignment of the measurement object (1) relative to the radiation source (3) and/or relative to the sensor device (6), and/or to derive information relating to a value of the other measurement parameter.

**Revendications**

1. Procédé pour analyser un objet de mesure (1),

- l'objet de mesure (1) étant soumis à un rayonnement invasif,
- une interaction du rayonnement invasif étant détectée avec un dispositif de détection sensible au rayonnement (6),
- un résultat de détection attendu du dispositif de détection (6) étant calculé en utilisant une géométrie théorique de l'objet de mesure (1) et en utilisant des propriétés du matériau et/ ou un résultat de détection attendu étant déterminé grâce à la mesure au moins d'une partie maîtresse et
- le résultat de détection attendu étant comparé à un résultat de détection réel du dispositif de détection (6),

**caractérisé en ce que** l'on calcule une pluralité de résultats de détection attendus, sachant que

- chacun des résultats de détection attendus correspond à une différente position et/ou orientation de l'objet de mesure (1) par rapport à la source de rayonnement (3) et/ ou par rapport au dispositif de détection (6) et/ ou **en ce que**

- chacun des résultats de détection attendus correspond à différentes valeurs d'un autre paramètre de mesure, l'autre paramètre de mesure étant un paramètre de mesure d'un dispositif de mesure avec lequel l'objet de mesure est mesuré, tel par exemple la longueur d'onde du rayonnement invasif, la résolution localisée du dispositif de détection (6), la durée d'exposition, c'est-à-dire la durée du rayonnement pour la prise d'une radiographie individuelle par le dispositif de détection (6), l'énergie et/ou la longueur d'onde ou fréquence et/ou l'énergie, les longueurs d'ondes ou la répartition des fréquences correspondantes des rayons X utilisés, la géométrie de la disposition de la source des rayons X et du dispositif de détection (6), l'angle d'ouverture de la source des rayons X et/ou la taille et la répartition des intensités du cône de rayonnement émis à partir de la source des rayons X, les informations sur l'uniformité des propriétés de détection d'éléments de détection,

une comparaison entre les différents résultats de détection attendus et le résultat de détection réel permettant de déterminer celui des résultats de détection attendus qui correspond le mieux au résultat de détection réel, et des informations sur la position et/ou l'orientation de l'objet de mesure (1) par rapport à la source de rayonnement (3) et/ou par rapport au dispositif de détection (6) et/ou des informations sur une valeur de l'autre paramètre de mesure étant ainsi déduites.

2. Procédé selon la revendication précédente, des signaux de détection du dispositif de détection (6) étant automatiquement numérisés, de sorte que le résultat de détection réel est disponible sous forme numérisée pour la comparaison avec le résultat de détection attendu.

3. Procédé selon l'une des revendications précédentes, l'objet de mesure (1) étant soumis au rayonnement invasif à partir de différentes directions et/ou dans différentes positions de rotation et respectivement un résultat de détection étant constaté, chacun des résultats de détection étant comparé avec un résultat de détection attendu, et des divergences des résultats de détection réels par rapport aux résultats de détection attendus permettant de déterminer l'emplacement d'une imperfection de l'objet de mesure (1).

4. Procédé selon la revendication précédente, les résultats de détection étant respectivement générés en tant que champs de valeurs de détection, les résultats de détection réels et les résultats de détection attendus associés étant respectivement comparés entre eux, et étant en particulier soustraits les uns des autres, et à partir des champs des valeurs de comparaison qui en résultent, grâce à une rétroprojection tomographique, un modèle tridimensionnel local de l'imperfection de l'objet de mesure (1) étant généré.

5. Procédé selon l'une des revendications précédentes, le dispositif de détection (6) présentant une pluralité de zones locales distinctes, de sorte que le rayonnement incident avec les zones locales individuelles est transformé en un signal de mesure indépendant, et pour chacune des zones localisées, un résultat de détection attendu étant généré et étant comparé avec un résultat de détection mesuré généré à partir du signal de mesure de la zone locale.

6. Procédé selon l'une des revendications précédentes, un résultat de détection attendu étant calculé avant une mesure de l'objet de mesure (1), et le résultat de détection attendu étant analysé afin de sélectionner des paramètres de mesure lors de la mesure de l'objet de mesure (1) et/ou une manière de mesurer l'objet de mesure (1).

7. Procédé selon l'une des revendications précédentes, au moins un deuxième résultat de détection attendu étant calculé, le deuxième résultat de détection correspondant à un état modifié par rapport à la géométrie théorique et/ou aux propriétés des matériaux attendues, lequel état se situe encore dans une plage autorisée, et moyennant quoi, grâce à une comparaison entre le deuxième résultat de détection attendu et le résultat de détection réel, on détermine si le résultat de détection réel se situe encore dans la plage autorisée.

8. Dispositif pour analyser un objet de mesure (1), le dispositif présentant les suivantes :

- une source de rayonnement (3) pour la génération d'un rayonnement invasif,
- un dispositif de détection (6) pour mesurer un résultat d'une interaction entre le rayonnement invasif et l'objet de mesure (1),
- un dispositif de calcul (13) pour calculer une pluralité de résultats de détection attendus du dispositif de détection (6) en utilisant une géométrie théorique de l'objet de mesure (1) et en utilisant des propriétés du matériau et/ou un dispositif de mémoire pour mettre en mémoire une pluralité de résultats de détection attendus, lesquels sont déterminés ou ont été déterminés grâce à la mesure au moins d'une partie maîtresse, moyennant quoi chacun des résultats de détection attendus correspond à une différente position et/ou orientation de l'objet de mesure (1) par rapport à la source de rayonnement (3) et/ou par rapport au dispositif de détection (6) et/ou chacun des résultats de détection attendus correspondant à différentes valeurs d'un autre paramètre de mesure, l'autre paramètre de mesure étant un paramètre de mesure d'un dispositif de mesure avec lequel l'objet de mesure est mesuré, tel par exemple la longueur d'onde du rayonnement invasif, la résolution localisée du dispositif de détection (6), la durée d'exposition, c'est-à-dire la durée du rayonnement pour la prise d'une radiographie individuelle par le dispositif de détection (6), l'énergie et/ou la longueur d'onde ou la fréquence et/ou l'énergie, les longueurs d'ondes ou la répartition des fréquences correspondantes des rayons X utilisés, la géométrie de la disposition de la source des rayons X et du dispositif de détection (6), l'angle d'ouverture de la source des rayons X et/ou la taille et la répartition des intensités du cône de rayonnement émis à partir de la source des rayons X, les informations sur l'uniformité des propriétés de détection d'éléments de détection, et
- un dispositif de comparaison (11), lequel est connecté au dispositif de détection (6) et au dispositif de calcul (13) et/ou lequel est connecté au dispositif de détection (6) et au dispositif de mémoire, le dispositif de comparaison (11) étant réalisé pour comparer la pluralité de résultats de détection attendus avec le résultat de détection réel,

le dispositif étant réalisé de manière à déterminer celui des résultats de détection attendus qui correspond le mieux au résultat de détection réel du dispositif de détection (6), et à en déduire des informations sur la position et/ou l'orientation de l'objet de mesure (1) par rapport à la source de rayonnement (3) et/ou par rapport au dispositif de détection (6) et/ou des informations sur une valeur de l'autre paramètre de mesure.

## Fig.1

## Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3924066 A1
- US 6047041 A
- WO 0231767 A
- DE 19846885 A1